# EUROPÄISCHE PATENTSCHRIFT

(11) **EP 0 733 002 B1**
(45) Veröffentlichungstag und Bekanntmachung des Hinweises auf die Patenterteilung: **04.03.1998**
(21) Anmeldenummer: 95901340.0
(22) Anmeldetag: 29.11.1994
(51) Int. Cl.: B60K 31/10

(54) **VERFAHREN UND VORRICHTUNG ZUM EINHALTEN EINER VORGEGEBENEN FAHRGESCHWINDIGKEIT EINES FAHRZEUGS**
PROCESS AND DEVICE FOR MAINTAINING A PREDETERMINED TRAVELLING SPEED OF A VEHICLE
PROCEDE ET DISPOSITIF PERMETTANT DE MAINTENIR LA VITESSE PREDEFINIE D'UN VEHICULE

(30) Priorität: 07.12.1993 DE 4341585
(43) Veröffentlichungstag der Anmeldung: 25.09.1996
(73) Patentinhaber: ROBERT BOSCH GMBH, 70442 Stuttgart (DE)
(72) Erfinder: SPECK, Hans-Reimer, D-70439 Stuttgart (DE); WEBER, Christian, D-71701 Schwieberdingen (DE); HUBER, Thomas, D-71717 Beilstein (DE)
(86) Internationale Anmeldenummer: DE9401414
(87) Internationale Veröffentlichungsnummer: WO9515868

(56) Entgegenhaltungen:
- US-A- 4 849 892
- US-A- 4 943 923
- US-A- 4 956 778
- US-A- 5 024 284

## Beschreibung

### Stand der Technik

Die Erfindung betrifft eine Verfahren und eine Vorrichtung zum Einhalten einer vorgegebenen Fahrgeschwindigkeit eines Fahrzeugs gemäß den Oberbegriffen der unabhängigen Patentansprüche.

Ein derartiges Verfahren bzw. eine derartige Vorrichtung ist aus der DE-OS 29 24 391 bekannt. Dort wird durch Ansteuerung eines die Fahrgeschwindigkeit des Fahrzeugs beeinflussendes Stellelement auf der Basis der Differenz zwischen einer vorgegebenen Soll- und einer gemessenen Istgeschwindigkeit eine vorgegebene Fahrgeschwindigkeit unabhängig vom Fahrerwunsch eingehalten, insbesondere die Fahrgeschwindigkeit auf einen Maximalwert begrenzt.

Bei der bekannten Vorgehensweise tritt eine die Fahrgeschwindigkeit reduzierende Wirkung erst nach Überschreiten der vorgegebenen Fahrgeschwindigkeit ein, da erst dann eine Differenz vorliegt. Ferner ist der Zusammenhang zwischen dem Ausmaß der Veränderung des von der Antriebseinheit des Fahrzeugs abgegebenen Moments zum Ausmaß der resultierenden Veränderung der Fahrgeschwindigkeit für jedes Fahrzeug, jede Antriebseinheit und für jeden Betriebszustand unterschiedlich.

Daher ist die bekannte Vorgehensweise zum Einhalten einer vorgegebenen Fahrgeschwindigkeit unbefriedigend.

Es ist daher Aufgabe der Erfindung, Maßnahmen anzugeben, welche bei einem Verfahren und einer Vorrichtung zum Einhalten einer vorgegebenen Fahrzeuggeschwindigkeit insbesondere mit Blick auf Komfort und Genauigkeit verbessern.

Dies wird durch die kennzeichnenden Merkmale der unabhängigen Patentansprüche erreicht.

Bei dem im Rahmen der bekannten Vorgehensweise verwendeten Stellelement handelt es sich um ein elektrisches, hydraulisches oder pneumatisches Stellelement, welches ein die Fahrgeschwindigkeit und damit Drehmoment bzw. Leistung der Antriebseinheit beeinflussendes Stellglied, z.B. eine Drosselklappe oder einen Einspritzpumpenhebel, steuert. Das Stellelement kann dabei in der herkömmlichen mechanischen Verbindung zwischen Stellglied und Fahrpedal angeordnet sein oder im Rahmen einer elektronischen Steuerung der Antriebseinheit als Stellelement der elektrischen, fahrerwunschabhängigen Steuerung ohne mechanische Verbindung dienen. Insbesondere bei pneumatischen Stellelementen mit einem Stellzylinder, der von einem Proportionalventil angesteuert wird, ist prinzipbedingt zu beachten, daß der Stellzylinder zu Beginn des Verstellvorgangs oder bei einer Änderung der Wirkungsrichtung der Verstellung einen bestimmten Mindest- bzw. Maximaldruck benötigt, um das Stellglied zu betätigen und das Drehmoment der Antriebseinheit zu erhöhen bzw. zu erniedrigen. Dieses Verhalten wird im folgenden Totgang bzw. Hysterese bezeichnet. Dies wird bei der bekannten Vorgehensweise nicht beachtet, so daß diese auch aus diesen Gründen unbefriedigend ist.

Daher werden gemäß nachstehend Maßnahmen angegeben, mit deren Hilfe das Einhalten einer vorgegebenen Fahrgeschwindigkeit auch unter Verwendung eines pneumatischen Stellelements verbessert wird.

Aus der DE-OS 36 18 844 ist ein Verfahren zur Begrenzung der Drehzahl einer Brennkraftmaschine bekannt, bei welchem bei der Bestimmung des drehzahlreduzierenden Signals die zeitliche Ableitung der Motordrehzahl Berücksichtigung findet, so daß ein Überschwingen der vorgegebenen Maximaldrehzahl vermieden wird. Diese Vorgehensweise wird auch zur Begrenzung der Fahrgeschwindigkeit unter Verwendung der zeitlichen Ableitung der Motordrehzahl eingesetzt. Diese Vorgehensweise zeigt weder Maßnahmen bei Überschreiten der vorgegebenen Fahrgeschwindigkeit noch Maßnahmen in Verbindung mit einem pneumatischen Stellglied, so dad diese die obengenannten Problemstellungen nicht befriedigend lösen kann.

Die US-Patentschrift 4 849 892 zeigt einen Fahrgeschwindigkeitsregler, bei welchem bei eingeschaltetem Fahrgeschwindigkeitsregler aus der Differenz zwischen Soll- und Istgeschwindigkeit eine Sollbeschleunigung des Fahrzeugs aus entsprechenden Kennlinien ausgewählt wird. Auf der Basis der Differenz zwischen Soll- und Istbeschleunigung wird dann im Rahmen einer Regelung das Moment der Antriebseinheit erhöht oder reduziert. Dabei findet eine Beschleunigungsregelung im gesamten Betriebsbereich des Fahrzeugs statt. Die US-Patentschrift 4 943 923 zeigt einen Fahrgeschwindigkeitsregler, bei dem der Verzeichenwechsel des Beschleunigungssignals erfaßt, die Änderungsrate der Geschwindigkeitsdifferent bestimmt und die Drosselklappe abhängig von der Beschleunigung und der Geschwindigkeitsdifferenz eingestellt wird. Die US-Patentschrift 4 956 778 zeigt einen Fahrgeschwindigkeitsregler, bei welchem im Rahmen der Wiederaufnahme der Regelung zur Verbesserung des Einschwingens auf die Beschleunigung des Fahrzeugs geregelt wird. Bis zu einem vorgegebenen Wert unterhalb der Sollgeschwindigkeit wird eine Sollbeschleunigung vorgegeben, die von vorherigen Istbeschleunigungswerten des Fahrzeugs abhängig ist bzw. nach Maßgabe eines Mittelwerts der Beschleunigung korrigiert wird. Die US-Patentschrift 5 024 284 zeigt einen Fahrgeschwindigkeitsregler, bei welchem das Ansteuertastverhältnis für die Drosselklappe abhängig von der Geschwindigkeitsdifferenz und der Beschleunigung des Fahrzeugs aus vorgegebenen Kann feldern abgeleitet wird. Maßnahmen zur Verbesserung das Einschwingens auf eine Zielgeschwindigkeit im Rahmen eines Fahrgeschwindigkeitsbegrenzers sind keiner dieser Patentschriften zu entnehmen.

### Vorteile der Erfindung

Durch die erfindungsgemäße Vorgehensweise wird ein Verfahren bzw. eine Vorrichtung zum Einhalten einer vorgegebenen Fahrzeuggeschwindigkeit bereitgestellt, bei welchem eine vorgegebene Fahrgeschwindigkeit mit verbessertem Komfort und verbesserter Genauigkeit eingehalten wird. Insbesondere wird durch die erfindungsgemäße Vorgehensweise sichergestellt, daß beim Erreichen der vorgegebenen Geschwindigkeit das Fahrzeug nicht weiter beschleunigt. Dies führt zu der vorteilhaften Wirkung, daß die vorgegebene Geschwindigkeit im wesentlichen beim erstmaligen Erreichen bereits eingehalten wird und die Maßnahmen zum Einhalten der Geschwindigkeit bereits vor Erreichen der vorgegebenen Geschwindigkeit eingreifen.

Diese Vorteile werden nicht nur bei Erreichen der vorgegebenen Geschwindigkeit von kleineren Geschwindigkeiten her, sondern auch dann erreicht, wenn die vorgegebene Geschwindigkeit von größeren Geschwindigkeitswerten her angenähert wird. Dies zeigt bei der Verwendung der erfindungsgemäßen Vorgehensweise als Begrenzung der Fahrzeuggeschwindigkeit besondere Vorteile nach einer Gefällefahrt, wenn das Fahrzeug auf einer ebenen Strecke sich wieder der vorgegebenen Geschwindigkeit von bertagsmäßig größeren Geschwindigkeiten her annähert.

Vorteilhaft ist, daß der Eingriff in das Moment der Antriebseinheit bei betragsmäßig großen Beschleunigungen bei niedrigeren Geschwindigkeiten einsetzt als bei betragsmäßig kleineren Beschleunigungen.

Da durch die erfindungsgemäße Vorgehensweise der Verlauf der Fahrzeugbeschleunigung während der Einsteuer- oder regelphase auf die vorgegebene Geschwindigkeit vorgegeben ist, wird ein definiertes Fahrzeugverhalten in dieser Phase erreicht.

Durch die erfindungsgemäße Vorgehensweise wird ferner der Einsatz von Stellelementen mit Totgang bzw. Hysterese zwischen Ansteuerung und Wirkung, insbesondere pneumatische` aber auch entsprechende hydraulische oder elektrische Stellelemente, ermöglicht. Bei derartigen Stellelementen wird durch die erfindungsgemäße Vorgehensweise sichergestellt daß das Stellelement zum Zeitpunkt des Eingriffes in das Moment der Antriebseinheit auf die Ansteuerung reagiert.

Weitere Vorteile ergeben sich aus der nachfolgenden Beschreibung von Ausführungsbeispielen sowie aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild einer Anordnung zum Einhalten einer vorgegebenen Fahrgeschwindigkeit, während in Figur 2 ein Flußdiagramm einer ersten Ausführungsform dargestellt ist, deren Wirkungsweise anhand der Diagramme nach Figur 3 und 4 verdeutlicht ist. Figur 5 zeigt ein Flußdiagramm einer zweiten Ausführungsform bei Verwendung von pneumatischen Stellelementen, wobei deren Wirkungsweise anhand der Diagramme in den Figuren 6 und 7 verdeutlicht ist.

### Beschreibung von Ausführungsbeispielen

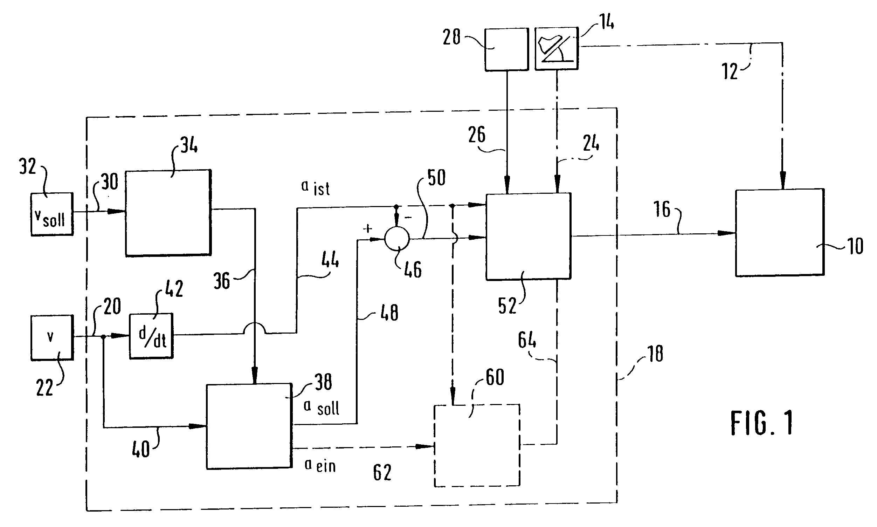

In Figur 1 ist anhand eines Übersichtsblockschaltbilds die erfindungsgemäße Vorgehensweise dargestellt. Dabei ist ein Stellelement 10 zur Beeinflussung des Drehmoments bzw. der Leistung einer nicht dargestellten Antriebseinheit eines Fahrzeugs, vorzugsweise eine Brennkraftmaschine, bezeichnet. Bei diesem Stellelement handelt es sich im bevorzugten Ausführungsbeispiel um ein pneumatisches Stellelement, in anderen vorteilhaften Ausführungsbeispielen um ein hydraulisches oder elektrisches Stellelement. Zur Steuerung der Leistung der Antriebseinheit ist das Stellelement im bevorzugten Ausführungsbeispiel einer Brennkraftmaschine mit einem nicht dargestellten Leistungsstellglied, einer Drosselklappe oder einem Einspritzpumpenhebel, verbunden. Dabei ist das Stellelement 10 im bevorzugten Ausführungsbeispiel in einer mechanischen Verbindung 12 angeordnet welche ein vom Fahrer betätigbares Bedienelement 14, ein Fahrpedal, mit dem Leistungsstellglied verbindet. Das Stellelement 10 dient dabei zur Betätigung des Leistungsstellgliedes unabhängig von der Stellung des Fahrpedals 14, wobei im bevorzugten Ausführungsbeispiel das Stellelement 10 lediglich gasnehmend das Leistungsstellglied beeinflussen kann, das heißt, daß seine maximale Position durch die momentane Stellung des Fahrpedals 14 vorgegeben ist. Das Stellelement 10 wird über eine Leitung 16 betätigt. Die Leitung 16 stellt die Ausgangsleitung einer Steuereinheit 18 dar. Dieser Steuereinheit 18 wird eine erste Eingangsleitung 20 von einer Meßeinrichtung 22 zur Erfassung der Fahrzeuggeschwindigkeit, in einem bevorzugten Ausführungsbeispiel eine weitere Eingangsleitung 24 vom Bedienelement 14 sowie Eingangsleitungen 26 von Meßeinrichtungen 28 zur Erfassung weiterer Betriebsgrößen von Antriebseinheit und/oder Fahrzeug zugeführt. Letzeres ist aus Übersichtlichkeitsgründen in Figur 1 nur am Beispiel einer Leitung und einer Meßeinrichtung dargestellt. Ferner ist der Steuereinheit 18 in einem vorteilhaften Ausführungsbeispiel eine weitere Eingangsleitung 30 von einem weiteren, vom Fahrer betätigbaren Bedienelement 32 zugeführt, über welches der Fahrer die vorgegebene Geschwindigkeit einstellt. Beim Bedienelement 32 kann es sich um einen Hebel, um Tasten zur Eingabe einer vorgegebenen Geschwindigkeit, um Einstellräder, etc. handeln. In einem vorteilhaften Ausführungsbeispiel ist das Bedienelement 32 mit dem Fahrpedal 14 identisch, wobei jeder Fahrpedalposition ein vorgegebener Geschwindigkeitswert zugeordnet ist. Die Eingangsleitung 30 der Steuereinheit 18 führt auf ein erstes Speicherelement 34, dessen Ausgangsleitung 36 auf ein zweites Speicherelement 38 führt. Diesem ist als zweite Eingangsleitung die Leitung 40, welche von der Eingangsleitung 20 abzweigt, zugeführt. Die Leitung 20 führt auf ein Element 42 zur Bestimmung der Fahrzeugbeschleunigung. Im einfachsten Fall handelt es sich beim Element 42 um ein Element mit Differentialverhalten. Die Ausgangsleitung 44 des Elements 42 führt auf eine Vergleichstelle 46, welcher ferner die Leitung 48, die Ausgangsleitung des Speicherelements 38, zugeführt ist. Die Ausgangsleitung 50 der Vergleichsstelle 46 führt auf ein Berechnungselement 52, dem ferner in einem vorteilhaften Ausführungsbeispiel die Leitungen 24 und 26 Ausgangsleitung 50 der Vergleichsstelle 46 führt auf ein Berechnungselement 52, dem ferner in einem vorteilhaften Ausführungsbeispiel die Leitungen 24 und 26 zugeführt sind. Die Ausgangsleitung 16 der Steuereinheit 18 bildet die Ausgangsleitung des Berechnungselements 52.

Im bevorzugten Ausführungsbeispiel unter Verwendung eines pneumatischen Stellelements sind ferner die in Figur 1 strichliert dargestellten Elemente vorgesehen. Die Leitung 44 führt dabei ergänzend auf das Berechnungselement 52 sowie auf ein weiteres Berechnungselement 60. Diesem ist ferner eine Leitung 62 vom Speicherelement 38 zugeführt. Die Ausgangsleitung 64 des Berechnungselements 60 führt auf das Berechnungselement 52.

Im bevorzugten Ausführungsbeispiel eines Fahrgeschwindigkeitsbegrenzers wird das Leistungsstellglied über die mechanische Verbindung 12 vom Fahrer betätigt. Das Stellelement 10 wirkt dabei ebenfalls auf das Leistungsstellglied ein und ist mechanisch derart angebunden, daß es das Leistungsstellglied nur zwischen der vom Fahrer durch das Fahrpedal vorgegebenen Stellung und der Leerlaufstellung betätigen kann. Das Stellelement selbst kann dabei pneumatischer, hydraulischer oder elektrischer Natur sein.

Die erfindungsgemäße Vorgehensweise basiert auf dem Grundgedanken, daß abhängig von der vorgegebenen Fahrgeschwindigkeit jeder Istgeschwindigkeit des Fahrzeugs eine Sollbeschleunigung zugeordnet wird, und die Abweichung der Istbeschleunigung von dieser Sollbeschleunigung als Regelgröße zur Steuerung des Drehmoments der Antriebseinheit und zum Einhalten der vorgegebenen Fahrgeschwindigkeit herangezogen wird. Ist also die Sollbeschleunigung größer als die Istbeschleunigung, dann wird das Drehmoment (Einspritzmenge, Luftzufuhr) erhöht, während bei einer gegenüber der Istbeschleunigung kleineren Sollbeschleunigung das Moment erniedrigt wird. Die Veränderung des Stellelement und damit die Veränderung des Drehmoment ist dabei in gasgebender Richtung begrenzt durch die vom Fahrer über das Fahrpedal vorgegebene Stellung des Leistungsstellglieds.

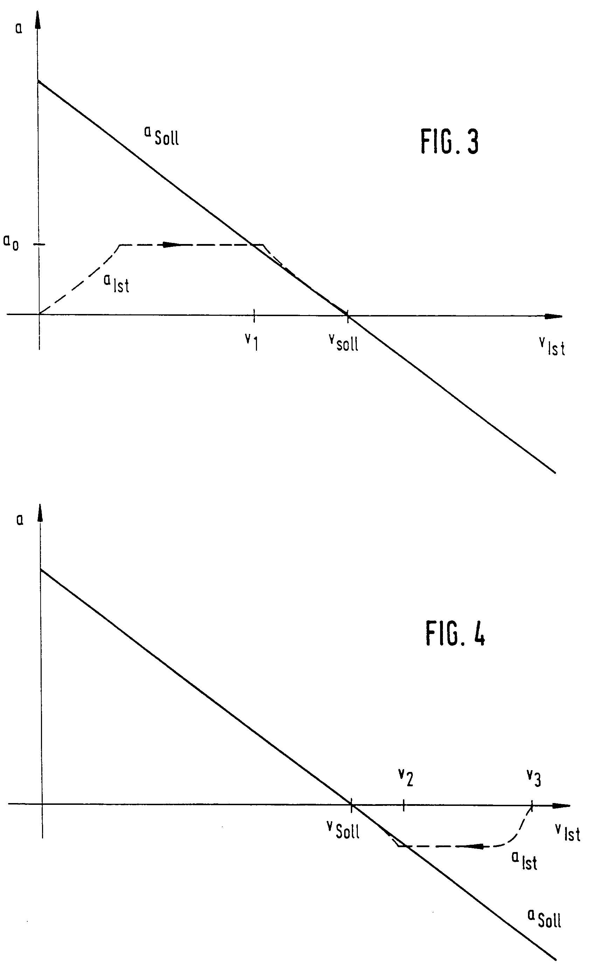

Im Speicherelement 34 ist die fest oder vom Fahrer vorgebbare Sollgeschwindigkeit gespeichert. Abhängig von der gespeicherten Sollgeschwindigkeit wird im Speicherelement 38 eine abgelegte Kennlinie der Sollbeschleunigung aSoll über der Istgeschwindigkeit vIst ausgewählt. In den Fig. 3 und 4 bzw. 7 und 8 ist ein Beispiel für eine solche Kennlinie dargestellt, wie sie sich in einem Ausführungsbeispiel als geeignet erwies. Dabei sind der vorgegebenen Sollgeschwindigkeit die Sollbeschleunigung Null, Geschwindigkeiten unterhalb der Sollgeschwindigkeit positive, Geschwindigkeiten über der Sollgeschwindigkeit negative Werte für die Sollbeschleunigung zugeordnet. Die Sollbeschleunigung aSoll wird aus einer solchen Kennlinie in Abhängigkeit der von der Meßeinrichtung 22 erfaßten aktuellen Istgeschwindigkeit ausgelesen und der Vergleichsstelle 46 übermittelt. Parallel dazu wird im Element 42 aus den gemessenen Werten der Fahrgeschwindigkeit die Istbeschleunigung des Fahrzeugs berechnen. Dies kann entweder durch zeitliche Differentiation oder durch Differenzenbildung zweier in einem festen Zeitraster erfaßten Fahrgeschwindigkeitswerten erfolgen. Der Istbeschleunigungswert aIst wird über die Leitung 44 ebenfalls der Vergleichsstelle 46 zugeführt. Dort wird die Differenz (Regelabweichung) zwischen Soll- und Istbeschleunigung bestimmt und dem Berechnungselement 52 zugeführt. Dieses berechnet nach Polarität und Größe der Differenz die notwendige Erhöhung oder Reduzierung des Moments der Antriebseinheit und gibt ein Ansteuersignal I über die Leitung 16 zum Stellelement 10 aus, welches eine Veränderung des Moments im Sinne einer Annäherung der Istbeschleunigung an die Sollbeschleunigung bewirkt. Zur Umsetzung der Differenz in ein Ansteuersignal kann dabei eine herkömmliche geeignet dimensionierte Reglerstruktur mit Proportional- Integral- und/oder Differentialanteil vorgesehen sein.

In einem vorteilhaften Ausführungsbeispiel betätigt der Fahrer das Leistungsstellglied nicht über die mechanische Verbindung 12, sondern auf elektrischem Wege über das Stellelement 10. In einer derartigen Ausführung wird der Berechnungseinheit 52 über die Leitung 24 die Fahrpedalstellung und über die Leitung 26 weitere Betriebsgrößen von Antriebseinheit und/oder Fahrzeug, z.B. Motordrehzahl, Motortemperatur, Gangstellung, etc., zugeführt. Im Normalbetrieb wird auf der Basis der Fahrpedalstellung und wenigstens einer der Betriebsgrößen eine Sollstellung für das Stellelement 10 bestimmt und dies über einen nicht dargestellten Lageregelkreis eingeregelt oder gesteuert eingestellt. Ergänzend zu einem solchen System wirkt die oben beschriebene Vorgehensweise zum Einhalten einer vorgegebenen Fahrgeschwindigkeit entsprechend, wobei abhängig von der aktuell vorliegenden Fahrpedalstellung sowie unter Berücksichtigung der Betriebsgrößen eine Maximalstellung für das Stellelement 10 vorgegeben, welche zum Einhalten der Fahrgeschwindigkeit nicht überschritten werden kann.

Wird als Stellelement 10 ein elektrischer Stellmotor mit Rückmeldung verwendet, so wird die berechnete Verstellung des Stellelements 10 in der Regel sofort wirksam. Wird jedoch ein pneumatischer Stellzylinder in der mechanischen Verbindung 12, der von einem Proportionalventil angesteuert wird, verwendet, so ist wie oben erwähnt Totgang bzw. Hysteresen zu Beginn des Verstellvorgangs bzw. bei Änderung seiner Wirkungsrichtung zu beachten. Durch die strichliert dargestellten Elementen werden diese Mindest- bzw. Maximaldrücke im voraus eingestellt, das heißt vor Beginn eines Verstellvorgangs zum Einhalten der Fahrgeschwindigkeit. Zu diesem Zweck ist für jede vorgebbare Geschwindigkeit eine weitere Kennlinie vorgegeben, welche eine Einschaltbeschleunigung aEin abhängig von der Istgeschwindigkeit beschreibt. Über- bzw. unterschreitet die Istbeschleunigung diesen geschwindigkeitsabhängigen Einschaltbeschleunigungswert, so wird im Berechnungselement 60 ein Ansteuersignal bestimmt, welches eine Druckerhöhung bzw. -erniedrigung auslöst. Die Ansteuerung bzw. die Drucksteuerung dauert solange an, bis anhand der aktuellen Fahrzeugbeschleunigung Auswirkungen der Druckveränderung zu erkennen sind. Der zur Verstellung notwendige Druck im Stellzylinder ist also bereitgestellt, wenn aufgund der Differenz zwischen Istbeschleunigung und Sollbeschleunigung ein Eingriff in das Drehmoment zum Einhalten der vorgegebenen Fahrgeschwindigkeit erfolgt bzw. die Wirkungsrichtung des Eingriffes sich ändert. Der entsprechende Verstellvorgang wird daher sofort eingeleitet.

Die beschriebene Vorgehensweise kann auch in vorteilhafter Weise in Verbindung mit alternativen Antriebskonzepten, z.B. Elektroantrieben, angewendet werden.

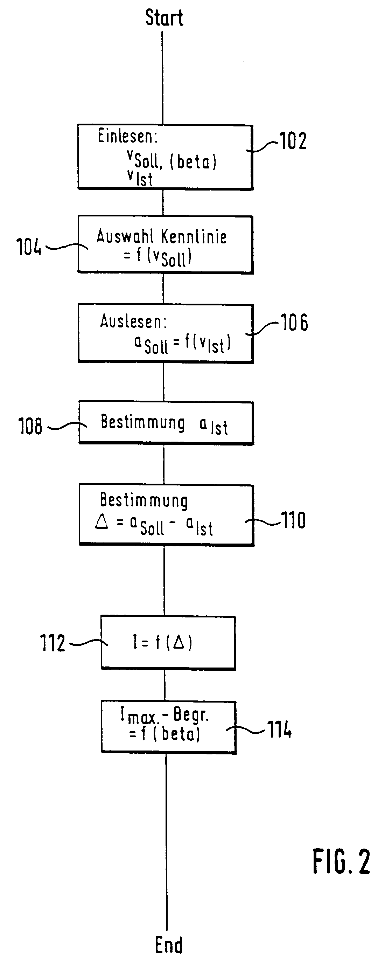

In Figur 2 ist ein Flußdiagramm skizziert, welches die Realisierung der erfindungsgemäßen Vorgehensweise als Rechnerprogramm darstellt. Nach Start des dargestellten Programmteils wird im Schritt 102 die gespeicherte vorgegebene Geschwindigkeit vSoll, die erfaßte Istgeschwindigkeit vIst sowie in einem vorteilhaften Ausführungsbeispiel die Stellung beta des Fahrpedals eingelesen. Im darauffolgenden Schritt 104 wird auf der Basis der Sollgeschwindigkeit vSoll eine Kennlinie aus einer gepreicherten Schar ausgewählt und im folgenden Schritt 106 abhängig von der aktuell vorliegenden Istgeschwindigkeit aus dieser Kennlinie die Sollbeschleunigung aSoll bestimmt. Danach wird im Schritt 108 die aktuelle Istbeschleunigung des Fahrzeugs aus der in diesem Programmdurchlauf erfaßten Istgeschwindigkeit und der im vorhergehenden Programmdurchlauf erfaßten Istgeschwindigkeit und im nächsten Schritt 110 die Differenz delta zwischen Soll- und Istbeschleunigung berechnet. Im folgenden Schritt 112 wird auf der Basis der Differenz gemäß einer vorgegebenen Regelstrategie eine Ansteuersignalgröße I für das Stellelement bestimmt. Diese kann einen Druckwert, eine Impulsbreite eines Tastverhältnisses, ein Stromwert, ein Stellungswert, etc. repräsentieren und stellt jeweils eine bestimmte Position des Stellelements 10 bzw. des Stellgliedes oder ein bestimmtes Drehmoment der Antriebseinheit dar. In einem vorteilhaften Ausführungsbeispiel mit elektrischer Beeinflussung des Leistungsstellgliedes abhängig vom Fahrerwunsch wird dann im nächsten Schritt 114 abhängig von der Fahrpedalstellung beta und ggf. der weiteren Betriebsgrößen ein Maximalwert Imax für die Ansteuersignalgröße I bestimmt und die in Schritt 112 berechnete Ansteuersignalgröße auf diesen Wert begrenzt. Bei einer mechanischen Verbindung zwischen Stellglied und Fahrpedal entfällt Schritt 114. Danach wird der Programmteil beendet und zu gegebener Zeit wiederholt.

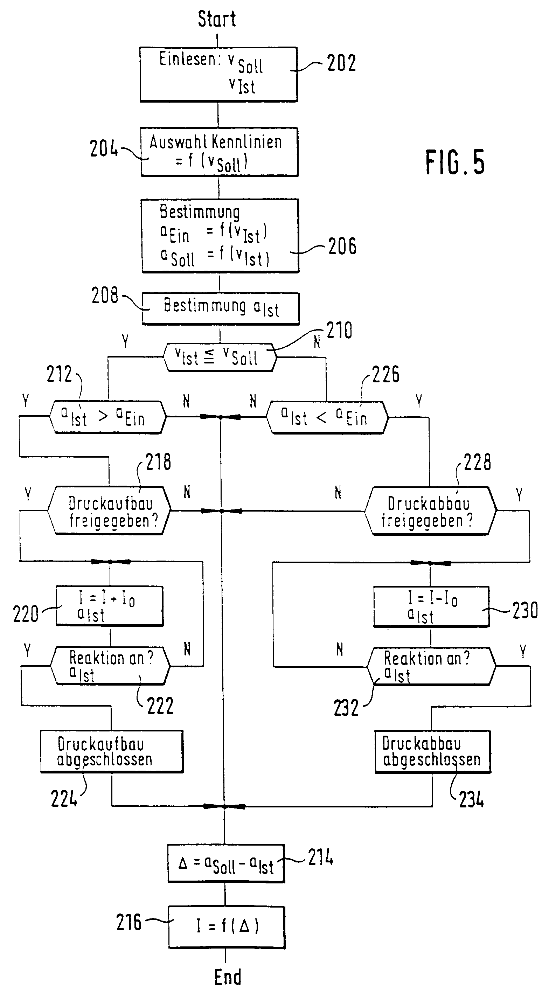

In den Figuren 3 und 4 wird die Wirkung der Vorgehensweise nach Figur 2 verdeutlicht. Dabei ist jeweils waagrecht die Istgeschwindig keit Vist, senkrecht die Beschleunigung a des Fahrzeugs aufgetragen. Es sei eine bestimmte Geschwindigkeit vSoll vorgegeben, der die beispielhaft dargestellten Kennlinie (durchgezogen) für die geschwindigkeitsabgängige Sollbeschleunigung aSoll zugeordnet ist.

In Figur 3 ist ein Beschleunigungsvorgang aus dem Stand dargestellt (vgl. strichlierte Linie). Zunächst beschleunigt das Fahrzeug durch entsprechende Vorgabe durch den Fahrer mit einem Anfangswert a0. Die Maßnahmen zum Einhalten der Fahrgeschwindigkeit vSoll haben keinen Einfluß auf das Moment der Antriebseinheit, da die Beeinflussung des Stellelements im Sinne einer Erhöhung der Beschleunigung durch die Fahrervorgabe begrenzt ist. Bei der Geschwindigkeit V1 ändert sich die Situation. Die Istbeschleunigung überschreitet die Sollbeschleunigung. Dadurch wird die Differenz delta negativ und eine Ansteuersignalgröße für das Stellelement zur Reduzierung des Drehmoments der Antriebseinheit berechnet und ausgegeben. Die Fahrzeugbeschleunigung fällt deshalb auf den Sollwert aSoll ab. Da das Fahrzeug weiter beschleunigt, nimmt die Fahrzeuggeschwindigkeit weiter zu, die Beschleunigung wird jedoch infolge der Regelung auf die geschwindigkeitsabhängige Sollbeschleunigung immer kleiner. Wird die Sollgeschwindigkeit vSoll erreicht, wird sie auch eingehalten, da die Beschleunigung Null ist, auf Null geregelt wird. Es ist sichergestellt, daß beim Erreichen der Sollgeschwindigkeit das Fahrzeug nicht mehr beschleunigt, die vorgegebene Fahrzeuggeschwindigkeit also beim erstmaligen Erreichen ohne Überschwingen eingehalten wird.

In der in Figur 4 dargestellten Fahrsituation fährt das Fahrzeug ein Gefälle hinunter, die Geschwindigkeit steigt somit über vSoll an. Es sei kein Regeleingriff zum Einhalten der Geschwindigkeit möglich, da der Fahrer das Fahrpedal losgelassen hat. Folgt nach der Gefällefahrt wieder eine Ebene (v3), wird der Fahrer das Pedal weiter auslenken und der Regeleingriff zum Einhalten der Geschwindigkeit das Drehmoment reduzieren und eine negative Beschleunigung zur Folge haben. Das Fahrzeug wird langsamer. Bei der Geschwindigkeit V2 ändere sich das Vorzeichen der Differenz zwischen Soll- und Istbeschleunigung. Das Drehmoment wird abhängig von der Differenz zwischen Soll- und Istbeschleunigung erhöht. Das Fahrzeug wird mit abnehmender Verzögerung weiter verlangsamt, wobei bei Erreichen der Sollgeschwindigkeit die Beschleunigung Null vorgegeben ist. Auch in dieser Fahrsituation wird also die Geschwindigkeit vSoll - ebenfalls bei erstmaligen Erreichen - eingehalten.

Läßt der Fahrer während der Gefällefahrt das Fahrpedal nicht vollständig los, so findet auch hier ein entsprechender Eingriff abhängig von der Differenz delta statt und das Stellelement wird zwischen der vom Fahrer vorgegebenen Maximalstellung und der Leerlaufstellung im Sinne einer Regelung der Beschleunigung eingestellt.

In Figur 5 ist ein weiteres Flußdiagramm gezeigt, welches eine Realisierung in Verbindung mit einem pneumatisches Stellelement skizziert. Nach Start des Programmteils wird im Schritt 202 Sollgeschwindigkeit vSoll und Istgeschwindigkeit vIst eingelesen und im folgenden Schritt 204 abhängig von der Sollgeschwindigkeit die Kennlinien für die Sollbeschleunigung aSoll und die Einschaltbeschleunigung aEin ausgewählt. Im nächsten Schritt 206 wird auf Basis der aktuellen Istgeschwindigkeit die vorgegebene Einschaltbeschleunigung aEin und die Sollbeschleunigung aSoll aus den Kennlinien bestimmt und dann im Schritt 208 aus der Differenz der aktuellen Fahrgeschwindigkeit und der aus dem vorhergehenden Programmdurchlauf erfaßten Geschwindigkeit die Istbeschleunigung aIst gebildet. Daraufhin wird im Abfrageschritt 210 überprüft, ob sich die Istgeschwindigkeit unterhalb der vorgegebenen Sollgeschwindigkeit befindet. Ist die Istgeschwindigkeit kleiner als oder gleich der Sollgeschwindigkeit, so wird im Schritt 212 überprüft, ob die Istbeschleunigung größer als die Einschaltbeschleunigung ist. Ist dies nicht der Fall, so wird eine nachfolgend beschriebene Marke für die Drucksteuerung zurückgesetzt und analog Figur 2 im Schritt 214 die Differenz zwischen Soll- und Istbeschleunigung bestimmt, im darauffolgenden Schritt 216 die Ansteuersignalgröße I auf der Basis dieser Differenz berechnet und der Programmteil beendet. Es wird also bei einer Istgeschwindigkeit unterhalb der Sollgeschwindigkeit und gleichzeitiger Istbeschleunigung unterhalb der Einschaltbeschleunigung eine Beschleunigungsregelung durchgeführt.

Wird im Schritt 212 erkannt, daß die Istbeschleunigung größer als die Einschaltbeschleunigung ist, so wird im darauffolgenden Abfrageblock 218 anhand einer gesetzten Marke geprüft, ob ein Druckaufbau im Stellzylinder des Stellelements 10 erforderlich ist. Ist dies nicht der Fall, das heißt wurde dieser Druckaufbau bereits durchgeführt, so wird mit Schritt 214 und 216 fortgefahren, während im gegenteiligen Fall im Schritt 220 die Ansteuersignalgröße I um einen vorgegebenen Wert I0 erhöht wird. Gleichzeitig wird im Schritt 220 die aktuelle Istbeschleunigung aIst bestimmt und danach im Abfrageschritt 222 geprüft, ob die Veränderung der Ansteuerung Auswirkungen auf die Istbeschleunigung hat. Ist dies nicht der Fall, wird Schritt 220 wiederholt. Wurde im Schritt 224 eine Auswirkung auf die Istbeschleunigung erkannt, wird der Druckaufbau als abgeschlossen betrachte und eine entsprechende Marke gesetzt. Danach wird mit den Schritten 214 und 216 fortgefahren.

In vergleichbarer Weise wird vorgegangen, wenn im Schritt 210 erkannt wurde, daß sich die Istgeschwindigkeit oberhalb der Sollgeschwindigkeit befindet. Dann wird im Schritt 226 überprüft, ob der negative Wert der Istbeschleunigung kleiner als der negative Werrt der Einschaltbeschleunigung ist. Ist dies nicht der Fall, wird die Marke für die Drucksteuerung zurückgesetzt und mit Schritt 214 und 216 fortgefahren. Im gegenteiligen Fall wird im Schritt 228 anhand der Marke überprüft, ob ein Druckabbau im Stellzylinder notwendig ist. Ist dies nicht der Fall, das heißt hat dieser bereits stattgefunden, wird mit Schritt 214 und 216 fortgefahren, während im gegenteiligen Fall im Schritt 230 die Ansteuersignalgröße um einen vorgegebenen Wert I0 erniedrigt und die aktuell vorliegende Istbeschleunigung bestimmt wird. Im darauffolgenden Abfrageschritt 232 wird überprüft, ob die Änderung der Ansteuersignalgröße zu einer entsprechenden Veränderung der Istbeschleunigung geführt hat. Ist dies nicht der Fall, wird Schritt 230 wiederholt. Anderenfalls wird gemäß Schritt 234 der Druckabbau als abgeschlossen erkannt, die Marke gesetzt und mit Schitt 214 und 216 fortgefahren.

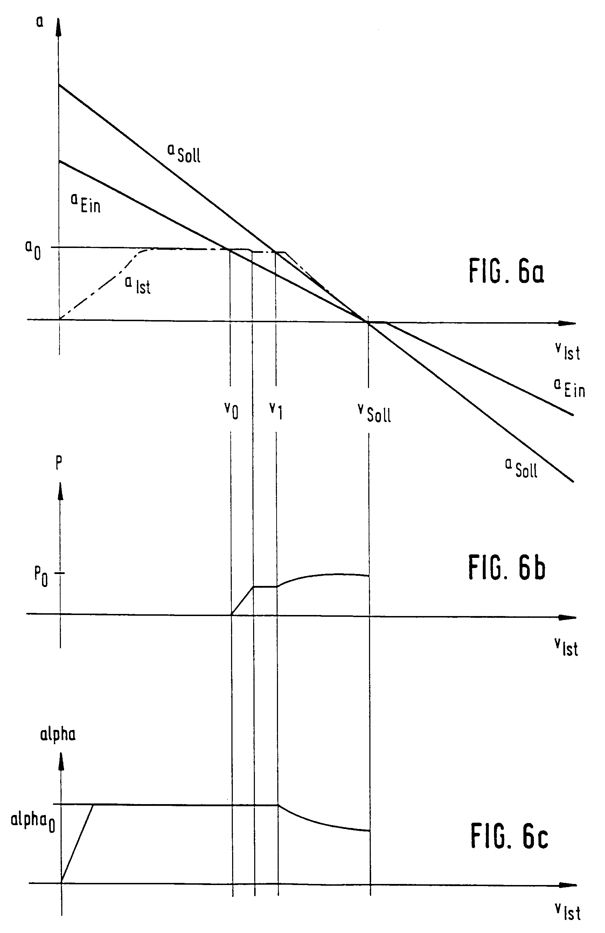

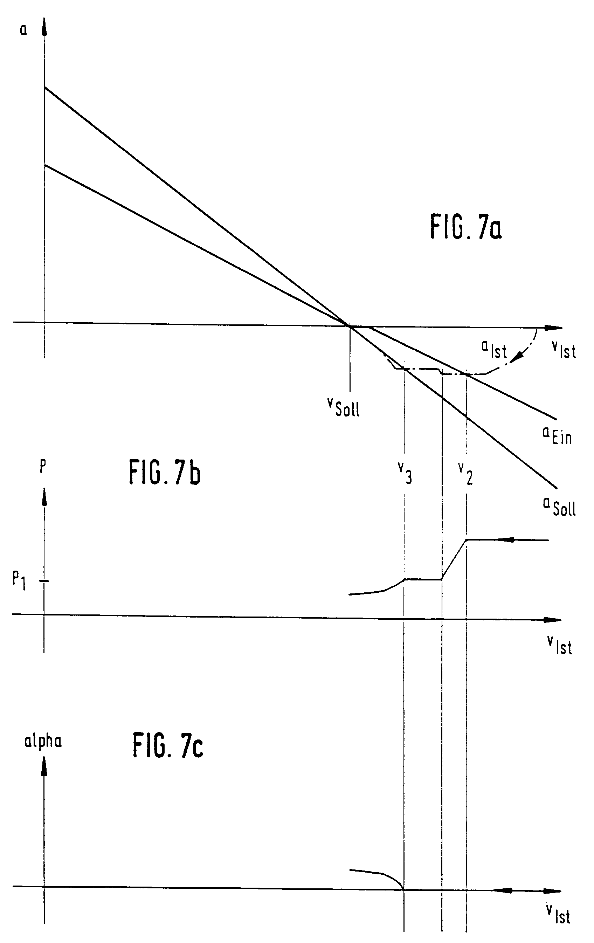

Die Wirkung dieser Vorgehensweise ist in den Figuren 6 und 7 weiter verdeutlicht. Dabei ist in Figur 6a die Beschleunigung des Fahrzeugs über der Istgeschwindigkeit aufgetragen, in Figur 6b der Stellzylinderdruck über der Istgeschwindigkeit und in Figur 6c die Stellung des Einspritzpumpenhebels über der Istgeschwindigkeit. Auch hier wird eine ausgewählte Sollgeschwindigkeit vSoll dargestellt, welcher die dargestellten Kennlinien für die Sollbeschleunigung aSoll und die Einschaltbeschleunigung aEin abhängig von der Istgeschwindigkeit zugeordnet sind. Auch hier wird das Fahrzeug zunächst aus dem Stand mit einer Beschleunigung a0 beschleunigt. Der Einspritzpumpemhebel steht in Folge der Fahrervorgabe auf einem Wert alpha0, der Stellzylinderdruck ist in dieser Phase Null, da kein Eingriff über das Stellelement auf das Motordrehmoment in reduzierendem Sinne notwendig ist. Bei der Geschwindigkeit v0 schneidet die Istbeschleunigung des Fahrzeugs den v0 zugeordneten Wert der Einschaltbeschleunigung. Dies führt zu einer Erhöhung des Stellzylinderdrucks gemäß Figur 6b auf den Mindestdruck P0, was keine Auswirkungen auf die Stellung des Einspritzpumpenhebels hat. Zum Zeitpunkt V1 schneidet die Istbeschleunigung die Sollbeschleunigung, wodurch eine Reaktion zur Begrenzung der Fahrgeschwindigkeit eintritt. Spätestens zu diesem Zeitpunkt entspricht der Stellzylinderdruck dem Mindestdruck, so daß sich der aus Figur 3 bekannte Regeleingriff sofort an der Stellung des Einspritzpumpenhebels und somit am Drehmoment der Antriebseinheit bemerkbar macht. Die Beschleunigung des Fahrzeugs wird dann gemäß der sich verändernden Sollbeschleunigung durch Veränderung von Stellzylinderdruck und Pumpenhebelstellung geregelt, bis die vorgegebene Geschwindigkeit erreicht ist.

Entsprechend ist in Figur 7 das Verhalten des Fahrzeugs bei Geschwindigkeiten oberhalb der Sollgeschwindigkeit dargestellt. Nach Abschluß der Gefällefahrt wird vom Fahrgeschwindigkeitsbegrenzer durch entsprechende Beeinflussung der Einspritzpumpenhebelstellung eine negative Beschleunigung erzeugt und das Fahrzeug verlangsamt.

Dies führt im Extremfall zu einem Maximaldruck Pmax im Stellzylinder und zur Leerlaufstellung des Pumpenhebels. Bei der Geschwindigkeit V2 überschreite die negative Istbeschleunigung den negativen Wert der Einschaltbeschleunigung` so daß der Druckabbau im Stellzylinder ohne Beeinflussung der Pumpenhebelstellung erfolgt. Dieser ist bis spätestens zur Geschwindigkeit V3 abgeschlossen, bei der die negative Istbeschleunigung die negative Sollbeschleunigung überschreitet und somit einen Regeleingriff im Sinne einer Momentenerhöhung zur Folge hat. Zu diesem Zeitpunkt ist im Stellzylinder ein Druck P1 aufgebaut der eine sofortige Reaktion erlaubt. Ab der Geschwindigkeit V3 wird demnach der Stellzylinderdruck gemäß der Differenz zwischen Soll- und Istbeschleunigung erniedrigt, die Einspritzpumpenhebelstellung dadurch entsprechend erhöht. Dadurch wird analog zu Figur 4 die Istbeschleunigung auf den vorgegebenen Sollbeschleunigungswert geregelt, bis die Sollgeschwindigkeit VSoll erreicht ist, die beim erstmaligen Erreichen im wesentlichen eingehalten wird.

In einem vorteilhaften Ausführungsbeispiel ist die vorstehend beschriebene Vorgehensweise nur bei Geschwindigkeiten oberhalb oder unterhalb der vorgegebenen Geschwindigkeit VSoll aktiv.

Ferner kann in einem Ausführungsbeispiel die Vorgehensweise vom Fahrer über Schaltmittel oder von außerhalb über Datenübertragungssysteme aktiviert werden.

## Patentansprüche

1. Verfahren zum Einhalten einer vorgegebenen Fahrgeschwindigkeit eines Fahrzeugs,
- wobei der Fahrer über ein Bedienelement (14) ein die Leistung der Antriebseinheit des Fahrzeugs beeinflussendes Stellglied (10) betätigt,
- wobei in einem Betriebszustand das Stellglied (10) im Sinne eines Einhaltens der vorgegebenen Fahrgeschwindigkeit (Vsoll) unabhängig vom Fahrer betätigt wird,
- wobei das Stellglied (10) zum Einhalten der vorgegebenen Fahrgeschwindigkeit (Vsoll) im Sinne einer Regelung der Fahrzeugbeschleunigung (aIst) auf einen vorgegebenen Beschleunigungswert (aSoll) eingestellt wird, der abhängig von der Fahrzeuggeschwindigkeit (Vist) vorgegeben wird,
dadurch gekennzeichnet, daß
- die Einstellung des Stellglieds (10) im Rahmen der Beschleunigungsregelung bei betragsmäßig größerer Beschleunigung bei einem betragsmäßig größeren Abstand zur vorgegebenen Geschwindigkeit (Vsoll) einsetzt als bei betragsmäßig kleinerer Beschleunigung.

2. Verfahren nach Anspruch 1, dadurch gekennzeichnet, daß die vorgegebenen Werte (aSoll) der Beschleunigung bei kleinerer Istgeschwindigkeit (vIst) als die vorgegebene Geschwindigkeit (vSoll) positiv sind und im allgemeinen mit sinkender Istgeschwindigkeit (vIst) steigen, während die vorgegebenen Werte (aSoll) für die Beschleunigung des Fahrzeugs bei Istgeschwindigkeiten (vIst) größer als die vorgegebene Geschwindigkeit (vSoll) negativ sind und im allgemeinen betragsmäßig mit steigender Istgeschwindigkeit (vIst) steigen.

3. Verfahren nach einem der vorhergehenden Ansprüche, dadurch gekennzeichnet, daß der Wert (aSoll) der vorgegebenen Beschleunigung bei der einer vorgegebenen Geschwindigkeit (vSoll) entsprechenden Istgeschwindigkeit (vIst) Null ist.

4. Verfahren nach einem der vorhergehenden Ansprüche dadurch gekennzeichnet, daß eine Zuordnung zwischen Werten der Istgeschwindigkeit (vIst) und vorgegebenen Werten (aSoll) für die Beschleunigung des Fahrzeugs vorgesehen ist.

5. Verfahren nach einem der vorhergehenden Ansprüche, dadurch gekennzeichnet, daß die vorgegebene Geschwindigkeit (vSoll) vom Fahrer einstellbar ist und für jede einstellbare Geschwindigkeit (vSoll) eine Zuordnung der Istgeschwindigkeit (vIst) zu vorgegebenen Werten der Beschleunigung (aSoll) vorgesehen ist.

6. Verfahren nach einem der vorhergehenden Ansprüche dadurch gekennzeichnet, daß das Stellelement (10) ein pneumatisches Stellelement ist.

7. Verfahren nach einem der vorhergehenden Ansprüche, dadurch gekennzeichnet, daß der Druck (P) im pneumatischen Stellelement (10) im voraus auf einen Wert (P0) gesteuert wird, der eine unmittelbare Reaktion des Drehmoments der Antriebseinheit bei Veränderung des Drucks (P) im Stellelement (10) gewährleistet, wenn eine Ansteuerung beginnt oder sich die Wirkungsrichtung der Ansteuerung ändert.

8. Verfahren nach Anspruch 7, dadurch gekennzeichnet, daß für jede vorgebbare Geschwindigkeit (vSoll) eine zweite Zuordnung vorgegeben ist, welche einen Beschleunigungseinschaltwert (aein) in Abhängigkeit der Istgeschwindigkeit (vIst) vorgibt, wobei die Werte für die Einschaltbeschleunigung (aein) betragsmäßig kleiner als die vorgegebenen Werte der Beschleunigung (aSoll) des Fahrzeugs sind.

9. Vorrichtung zum Einhalten einer vorgegebenen Fahrgeschwindigkeit eines Fahrzeugs,
- mit einem die Leistung der Antriebseinheit des Fahrzeugs beeinflussenden, vom Fahrer über ein Bedienelement (14) betätigbaren Stellglied (10),
- welches in einem Betriebszustand im Sinne eines Einhaltens der vorgegebenen Fahrgeschwindigkeit (Vsoll) unabhängig vom Fahrer betätigt wird,
- mit einer Beschleunigungsregelung, welche das Stellglied (10) zum Einhalten der vorgegebenen Fahrgeschwindigkeit (Vsoll) im Sinne einer Regelung der Fahrzeugbeschleunigung (aIst) auf einen vorgegebenen Beschleunigungswart (aSoll) einstellt, dar abhängig von der Fahrzeuggeschwindigkeit (Vist) vorgegeben wird,
dadurch gekennzeichnet, daß
- die Beschleunigungsregelung auf das Stellglied (10) bei betragsmäßig größerer Beschleunigung bei einem betragsmäßig größeren Abstand zur vorgegebenen Geschwindigkeit (Vsoll) einwirkt als bei betragsmäßig kleinerer Beschleunigung.

## Claims

1. Method of maintaining a predetermined travelling speed of a vehicle,
- the driver actuating via an operating element (14) a regulating member (10) which influences the power of the drive unit of the vehicle,
- in an operating state the regulating member (10) being actuated, independently of the driver, with the effect of maintaining the predetermined travelling speed (V_{des}), and
- for the purpose of maintaining the predetermined travelling speed (V_{des}), the regulating member (10) being set, with the effect of controlling the vehicle acceleration (a_{act}), to a predetermined acceleration value (a_{des}) which is predetermined dependent on the vehicle speed (V_{act}),
characterized in that
- the setting of the regulating member (10) for the purpose of acceleration control commences at a distance of greater amount from the predetermined speed (V_{des}) at an acceleration of greater amount than at an acceleration of smaller amount.

2. Method according to Claim 1, characterized in that the predetermined values (a_{des}) of acceleration are positive at a lower actual speed (V_{act}) than the predetermined speed (V_{des}) and, in general, increase with a decreasing actual speed (V_{act}), whilst the predetermined values (a_{des}) for the acceleration of the vehicle are negative at actual speeds (V_{act}) higher than the predetermined speed (V_{des}) and, in general, increase in amount with an increasing actual speed (V_{act}).

3. Method according to one of the preceding claims, characterized in that the value (a_{des}) of the predetermined acceleration at the actual speed (V_{act}) corresponding to a predetermined speed (V_{des}) is zero.

4. Method according to one of the preceding claims, characterized in that a relationship is provided between values of the actual speed (V_{act}) and predetermined values (a_{des}) for the acceleration of the vehicle.

5. Method according to one of the preceding claims, characterized in that the predetermined speed (V_{des}) can be set by the driver and a relationship between the actual speed (V_{act}) and predetermined acceleration values (a_{des}) is provided for each settable speed (V_{des}).

6. Method according to one of the preceding claims, characterized in that the regulating element (10) is a pneumatic regulating element.

7. Method according to one of the preceding claims, characterized in that the pressure (P) in the pneumatic regulating element (10) is set beforehand to a value (Pₒ) which ensures an immediate reaction of the torque of the drive unit in the event of a variation of the pressure (P) in the regulating element (10) when control begins or when the effective direction of control changes.

8. Method according to Claim 7, characterized in that a second relationship, which predetermines an acceleration cut-in value (aᵢₙ) dependent on the actual speed (V_{act}), is predetermined for each predeterminable speed (V_{des}), the values for the cut-in acceleration (aᵢₙ) being lower in amount than the predetermined acceleration values (a_{des}) of the vehicle.

9. Device for maintaining a predetermined travelling speed of a vehicle,
- with a regulating member (10) which influences the power of the drive unit of the vehicle and can be actuated by the driver via an operating element (14)
- and which , in an operating state, is actuated, independently of the driver, with the effect of maintaining the predetermined travelling speed (V_{des}),
- and with an acceleration control which, for the purpose of maintaining the predetermined travelling speed (V_{act}), sets the regulating member (10), with the effect of controlling the vehicle acceleration (a_{act}), to a predetermined acceleration value (a_{des}) which is predetermined dependent on the vehicle speed (V_{act}),
characterized in that
- the acceleration control acts on the regulating member (10) at a distance of greater amount from the predetermined speed (V_{act}) at an acceleration of greater amount than at a acceleration of smaller amount.

## Revendications

1. Procédé pour maintenir un véhicule à une vitesse de déplacement prédéterminée, selon lequel,
• le conducteur actionne par l'intermédiaire d'un élément de manoeuvre (14), un organe de réglage (10) influençant la puissance fournie par le groupe d'entraînement du véhicule,
• dans un état de fonctionnement, l'organe de réglage (10) est actionné dans le sens du respect de la vitesse de déplacement prédéterminée (v_{cons}), indépendamment du conducteur,
• l'organe de réglage (10) est réglé pour respecter la vitesse de déplacement prédéterminée (v_{cons}) dans le sens d'une régulation de l'accélération du véhicule (aᵣₑₑₗ) à une valeur prédéterminée de l'accélération (a_{cons}), qui est prédéterminée de façon indépendante de la vitesse du véhicule (vᵣₑₑₗ),
caractérisé en ce que
dans le cadre de la régulation d'accélération le réglage de l'organe de réglage (10) est mis en oeuvre pour l'accélération d'amplitude plus grande, pour une distance d'amplitude relativement grande par rapport à la vitesse prédéterminée (v_{cons}), que pour une accélération d'amplitude plus petite.

2. Procédé selon la revendication 1,
caractérisé en ce que
les valeurs prédéterminées (a_{cons}) de l'accélération pour une vitesse réelle petite (vᵣₑₑₗ) inférieure à la vitesse prédéterminée (v_{cons}) sont positives et de façon générale augmentent à mesure que la vitesse réelle diminue (vᵣₑₑₗ) alors que les valeurs prédéterminées (a_{cons}) pour l'accélération du véhicule aux vitesses réelles (vᵣₑₑₗ) supérieure à la vitesse prédéterminée (v_{cons}), sont négatives et de façon générale leur amplitude augmente avec la vitesse réelle (vᵣₑₑₗ).

3. Procédé selon l'une des revendications précédentes,
caractérisé en ce que
la valeur (a_{cons}) de l'accélération prédéterminée est égale à zéro pour une vitesse réelle (vᵣₑₑₗ) correspondant à une vitesse prédéterminée (v_{cons}) .

4. Procédé selon l'une des revendications précédentes,
caractérisé par
une association entre les valeurs de la vitesse réelle (Vᵣₑₑₗ) et une valeur prédéterminée (a_{cons}) de l'accélération du véhicule.

5. Procédé selon l'une des revendications précédentes,
caractérisé en ce que
la vitesse prédéterminée (v_{cons}) est réglée par le conducteur et pour chaque vitesse réglable (v_{cons}) une association relie la vitesse réelle (vᵣₑₑₗ) et les valeurs prédéterminées de l'accélération (a_{cons}).

6. Procédé selon l'une des revendications précédentes,
caractérisé en ce que
l'élément de réglage (10) est un élément de réglage pneumatique.

7. Procédé selon l'une des revendications précédentes,
caractérisé en ce que
la pression (P) dans l'élément de réglage pneumatique (10) est commandée au préalable sur une valeur (PO) qui garantit une réaction directe du couple du groupe d'entraînement pour une variation de la pression (P) dans l'élément de réglage (10), si une commande commence ou si la direction d'actionnement change.

8. Procédé selon la revendication 7,
caractérisé en ce que
pour chaque vitesse prédéterminée (v_{cons}), on prédétermine une seconde relation qui prédéfinie une valeur de mise en oeuvre de l'accélération (aₘₑ) en fonction de la vitesse réelle (vᵣₑₑₗ) les valeurs de l'accélération de mise en oeuvre (aₘₑ) étant d'amplitude plus faible que les valeurs prédéterminées de l'accélération (a_{cons}) du véhicule.

9. Dispositif pour maintenir un véhicule à une vitesse prédéterminée comprenant :
• un organe de réglage (10) actionné par l'intermédiaire d'un élément de manoeuvre (14) à la disposition du conducteur pour influencer la puissance du groupe d'entraînement du véhicule,
• dans un état de fonctionnement, cet organe est actionné dans le sens du respect de la vitesse de déplacement prédéterminée (v_{cons}) indépendamment du conducteur,
• pour une régulation de l'accélération qui règle l'organe de réglage (10) pour respecter la vitesse de déplacement prédéterminée (v_{cons}) dans le sens d'une régulation de l'accélération du véhicule (aᵣₑₑₗ) a une valeur d'accélération prédéterminée (a_{cons}), qui est prédéterminée en fonction de la vitesse du véhicule (vᵣₑₑₗ),
caractérisé en ce que
la régulation de l'accélération agit sur l'organe de réglage (10) pour une accélération d'amplitude plus grande et une distance d'amplitude plus grande par rapport à la vitesse prédéterminée (v_{cons}) que pour une accélération d'amplitude plus petite.
